# EUROPÄISCHE PATENTSCHRIFT

(11) **EP 3 563 676 B1**
(45) Veröffentlichungstag und Bekanntmachung des Hinweises auf die Patenterteilung: **10.03.2021**
(21) Anmeldenummer: 19171306.4
(22) Anmeldetag: 26.04.2019
(51) Int. Cl.: A01K 31/04, F26B 17/04, F26B 3/04

(54) **GEFLÜGELHALTUNGSVORRICHTUNG MIT TROCKNUNGSVORRICHTUNG**
POULTRY HOLDING DEVICE WITH DRYING DEVICE
DISPOSITIF DE MAINTIEN DE VOLAILLE POURVU DE DISPOSITIF DE SÉCHAGE

(30) Priorität: 30.04.2018 DE 202018102416 U
(43) Veröffentlichungstag der Anmeldung: 06.11.2019
(73) Patentinhaber: Big Dutchman International GmbH, 49377 Vechta (DE)
(72) Erfinder: Otto-Lübker, Friedrich, 49377 Vechta (DE); Küking, Jörg, 49377 Vechta (DE); Möller, Günter, 49377 Vechta (DE); Pucoski, Krste, 49377 Vechta (DE); Gerken, Sebastian, 49377 Vechta (DE)
(74) Vertreter: Eisenführ Speiser

(56) Entgegenhaltungen:
- EP-A1- 0 740 900
- DE-A1- 19 634 126
- ES-A1- 2 036 482
- ES-A1- 2 065 788
- FR-A1- 2 693 628
- JP-A- 2006 115 773

## Beschreibung

Die Erfindung betrifft eine Geflügelhaltungsvorrichtung, umfassend einen Aufenthaltsbereich für das Geflügel, eine unterhalb des Aufenthaltsbereichs angeordnete Auffangvorrichtung mit einer Auffangfläche für Geflügelkot und eine Trocknungsvorrichtung, die ausgebildet ist, um den Geflügelkot auf der Auffangvorrichtung zu trocknen. Ein weiterer Aspekt der Erfindung ist eine Trocknungsvorrichtung zur Trocknung von auf einer Auffangfläche einer Auffangvorrichtung lagernden Geflügelkots in einer Geflügelhaltungsvorrichtung.

Geflügelhaltungsvorrichtungen werden dazu eingesetzt, um Geflügel zur Fleisch- oder Eierproduktion zu halten. Dies können beispielsweise Haltungsformen in Volieren oder Käfigen sein, ebenso können Haltungsformen, bei denen die Tiere eine Bodenaufenthaltsfläche und ein Rückzugsgebiet zur Eiablage oder für Ruhephasen auf einer erhöhten Tieraufenthaltsfläche haben, eingesetzt werden.

In solchen Geflügelhaltungsvorrichtungen fällt regelmäßig durch die Tiere produzierter Kot an, der aus hygienischen Gründen zeitnah aus dem Tieraufenthaltsbereich entfernt werden muss. Es ist hierfür beispielsweise bekannt, unterhalb einer erhöht angeordneten Tieraufenthaltsebene, die als durchlässige, beispielsweise perforierte oder gitterartige Aufstandsfläche ausgeführt ist, einen Auffangbereich für den Tierkot anzuordnen. In diesem Auffangbereich kann beispielsweise ein Endlos-Förderband als Auffangfläche angeordnet sein, mit dem der Tierkot aufgefangen und abtransportiert wird.

Es ist angestrebt, aus Gründen der Verringerung einer Umweltbelastung den Tierkot einer weiteren effizienten Verwertung zuzuführen. Beispielsweise kann es hierfür erforderlich sein, den Tierkot weiterzuverarbeiten, beispielsweise zu granulieren oder einer Vergasung oder Verbrennung zuzuführen, um hieraus eine Energiewandlung zu erzielen, die beispielsweise zur Stromerzeugung dienen kann.

Für diese Weiterverarbeitung ist es regelmäßig wünschenswert, den Tierkot zu trocknen. Es ist hierzu bekannt, den Tierkot in einer beispielsweise mehrfach vertikal gestaffelten Trocknungsbandvorrichtung einem Trocknungsluftstrom auszusetzen, der durch eine Luftfördervorrichtung in Gestalt eines Ventilators erzeugt wird. Der Tierkot wird dann auf einem bevorzugt perforierten Trocknungsband durch diesen Trocknungsluftstrom getrocknet. Eine solche Trocknungsvorrichtung ist aus EP 2 003 412 B1 vorbekannt.

Zur Beschleunigung der Trocknung ist es bekannt, den Tierkot bereits auf dem als Auffangfläche dienenden Förderband mit einem Trocknungsluftstrom zu beaufschlagen. Hierzu ist aus US 9 820 472 B1 eine Trocknungsvorrichtung bekannt, die einen mit einem Luftstrom beaufschlagten Luftkanal aufweist, der aus seitlichen Austrittsöffnungen einen Luftstrom auf den Tierkot auf dem Förderband unterhalb der Tieraufenthaltsfläche richtet. Derartige Trocknungsvorrichtungen direkt unterhalb des jeweiligen Tieraufenthaltsbereichs haben den Nachteil, dass der dafür notwendige Transport von komprimierter Luft mithilfe von z.B. Radialgebläsen durch den Luftkanal über größere Distanzen erfolgen muss und dabei erhebliche Druckverluste durch Reibung der Luft an den Wandungen entstehen mit der Folge einer schlechten Energieeffizienz in Bezug zur erzielten Trocknungsleistung. Weiterhin hat der reibungsbedingte Druckverlust bezogen auf die Luftkanal- bzw. Anlagenlänge zur Folge, dass die Trocknungsqualität an weiter entfernten Auffangflächen niedriger ist als bei kürzeren Distanzen. Dokument JP2006115773 A beschreibt eine Geflügelhaltungsvorrichtung gemäß dem Oberbegriff des Anspruchs 1.

Die bekannten Trocknungsvorrichtungen erzielen zwar eine Trocknung des Tierkots, jedoch ist hierzu die Installation eines separaten Trocknungstunnels erforderlich, und die Trocknung nimmt einen gewissen Zeitraum in Anspruch. Es ist wünschenswert, die Trocknung sowohl hinsichtlich der erzielten Trocknungsuniformität bezogen auf die Anlagenlänge und der eingesetzten Energie zu verbessern. Die Erfindung strebt an, eine diesbezüglich verbesserte Trocknungsvorrichtung bereitzustellen.

Die sich der Erfindung stellende Aufgabe wird gelöst durch eine Geflügelhaltungsvorrichtung der eingangs beschriebenen Art, bei der die Trocknungsvorrichtung ein Fächerelement umfasst, das schwenkbar um eine Schwenkachse gelagert ist, die in einem Winkel von 45-90° zur Auffangfläche ausgerichtet ist.

Erfindungsgemäß bereitgestellt wird eine Geflügelhaltungsvorrichtung, die einen Aufenthaltsbereich für Geflügel aufweist. Dieser Aufenthaltsbereich kann ein umschlossener oder offener Bereich sein, in dem sich die Tiere auf einer oder mehreren Aufenthaltsebenen bewegen und aufhalten können. Tierkot, den die Tiere absondern, wird durch eine unterhalb des Aufenthaltsbereichs angeordnete Auffangvorrichtung aufgefangen. Der Aufenthaltsbereich ist demnach so gestaltet, dass der Tierkot nicht im Aufenthaltsbereich selbst verbleibt, sondern durch eine entsprechend durchlässige Begrenzung des Tieraufenthaltsbereichs, beispielsweise eine gitterartige oder perforierte Aufstandsfläche für die Tiere, hindurchfallen kann oder aber (auch) seitlich aus dem Tieraufenthaltsbereich herausfallen kann. Der Tierkot wird dann durch eine Auffangfläche aufgefangen und auf dieser Auffangfläche gesammelt. Die Auffangfläche kann horizontal oder geneigt angeordnet sein und beispielsweise durch eine Fördervorrichtung gebildet werden, deren Transportfläche die Auffangfläche teilweise oder vollständig darstellt. Beispielsweise kann ein Förderband, das geschlossen oder perforiert sein kann, hierzu eingesetzt werden. Weiterhin kann die Auffangfläche Vorrichtungen aufnehmen, z.B. seilgezogene Schieber- oder Räumelemente, die den Kotabtransport ausführen. In solchen Vorrichtungen wird der Tierkot entweder in Längsrichtung abtransportiert oder 90° zur Längserstreckung seitlich abgeräumt.

Diese Art der Geflügelhaltungsvorrichtung mit Aufenthaltsbereich und Auffangvorrichtung ist beispielsweise als Bauart einer Voliere oder Käfiganordnung bekannt, bei der mehrere Ebenen, in denen sich die Tiere aufhalten können, in vertikaler Richtung gestaffelt sind und sich der Tieraufenthaltsbereich in einer Längsrichtung als Käfig- oder Volierenreihe erstreckt. Bei solchen Geflügelhaltungsvorrichtungen sind häufig mehrere vertikal beabstandete Auffangvorrichtungen vorgesehen, die jeweils unterhalb eines Abschnitts des Aufenthaltsbereichs angeordnet sind.

Erfindungsgemäß ist eine spezifisch ausgebildete Trocknungsvorrichtung Bestandteil der Geflügelhaltungsvorrichtung. Diese Trocknungsvorrichtung dient dazu, um den Tierkot, der auf der Auffangfläche angeordnet ist, zu trocknen. Zu diesem Zweck umfasst die Trocknungsvorrichtung ein Fächerelement. Als Fächerelement ist hierbei generell ein platten-, gurt- oder bandähnliches Flächenelement zu verstehen, das eine gewisse Steifigkeit aufweist, jedoch auch eine gewisse Elastizität aufweisen kann. Dieses Fächerelement dient der Luftbewegung und ist zu diesem Zweck solcherart um eine Schwenkachse schwenkbar gelagert, dass es eine Relativbewegung zu dem Tierkot auf der Auffangfläche ausführen kann. Diese Relativbewegung erzeugt eine Luftbewegung, die einen kontinuierlichen Luftaustausch mit der Umgebungsluft und somit eine Wasseraufnahme der Luft und Trocknungswirkung auf den Tierkot auf der Auffangfläche erzielt.

Erfindungsgemäß ist vorgesehen, dass die Schwenkachse der Schwenkbewegung dieses Fächerelements in einem Winkel von 45° - 90° zur Auffangfläche ausgerichtet ist. Die Schwenkachse verläuft bevorzugt in einem Winkel von 90° zur Auffangfläche, steht also genau senkrecht zu der Ebene, in der die Auffangfläche verläuft. Als Ebene, in der die Auffangfläche verläuft und als Referenz für die Winkellage der Schwenkachse zur Auffangfläche kann hierbei, wenn die Auffangfläche gekrümmte oder abgewinkelte Abschnitte umfasst, ein gemittelter Verlauf der Auffangfläche dienen - generell ist in vielen Geflügelhaltungsvorrichtungen eine horizontale Lage der Auffangfläche vorgesehen, mit einer möglicherweise dabei realisierten randseitigen Abwinkelung nach oben. In diesem Fall liegt die Schwenkachse folglich bevorzugt genau vertikal, oder in einem bis zu 45° zur Vertikalen geneigten Winkel.

Es ist zu verstehen, dass bevorzugt die Schwenkachse in einem zeitlich konstanten Winkel zur Auffangfläche steht, sich also nicht während des Trocknungsvorgangs in ihrer Winkellage zur Auffangfläche verändert - allerdings sind zeitliche sich verändernde Winkellagen innerhalb des angegebenen Winkelbereichs von der Erfindung ebenso umfasst.

Mit der erfindungsgemäßen Ausgestaltung wird der Vorteil erzielt, dass der Kot bereits in der Geflügelhaltungsvorrichtung getrocknet wird und nicht erst in einem nachgelagerten Schritt an einem beabstandeten Ort. Da nasser oder feuchter Kot in erheblichem Maße stärkere Ammoniakemissionen verursacht als trockener Kot können hierdurch die Folgen einer starken Ammoniakemission in Gestalt eines schlechteren Stallklimas mit Reizungen der Tierschleimhäute und einem verschlechterten allgemeinen Wohlbefinden der Tiere vermieden werden und zugleich kann die Notwendigkeit einer aufwändigen Abluftaufbereitung der Stallluft, um den Ammoniak aus der Stallluft zu entfernen, entfallen.

Erfindungsgemäß als vorteilhaft hat sich weiter erwiesen, dass der für die Trocknung benötigte Zeitraum als auch der dafür benötigte Bauraum und apparative Aufwand maßgeblich verringert werden kann gegenüber vorbekannten Lösungen. Es treten weniger Reibungsverluste auf und es kann ein Bauraum genutzt werden, der zu einem gewissen Teil bereits als Freiraum in bekannten Geflügelhaltungsvorrichtung vorhanden war.

In bestimmten Anwendungen kann es vorteilhaft sein, wenn anstelle der genau senkrechten Ausrichtung der Schwenkachse zur Auffangfläche eine geneigte Ausrichtung der Schwenkachse vorgesehen ist, beispielsweise in einem Winkelbereich, der kleiner als 90° ist, wie einem Winkelbereich, der zwischen 80° und 90° zur Auffangfläche liegt. Der Winkelbereich kann generell so ausgewählt werden, dass er mit einer unteren Grenze von 45°, 60°, 75° oder 80° ausgewählt wird. Als obere, mit eingeschlossene Bereichsgrenze des Winkels hat sich als vorteilhaft eine senkrechte Ausrichtung, also eine Winkellage von 90° zur Auffangfläche erwiesen.

Als eine schwenkbare Lagerung des Fächerelements ist erfindungsgemäß eine Lagerung zu verstehen, die allgemein eine Rotationsbewegung, also eine Schwenkbewegung oder eine Drehbewegung, um die Schwenkachse ermöglicht. Dies kann durch eine in einer Lagerung rotierende Welle oder durch eine feststehende physikalische Achse, um welche eine Lagerung des Fächerelements rotiert, realisiert sein.

Erfindungsgemäß ist es, dass eine reziprokale, also eine sich wiederholend hin- und hergehende Schwenkbewegung in einem vorbestimmten, begrenzten Winkelbereich, beispielsweise einem Winkelbereich, der kleiner als 180°, kleiner als 120°, kleiner als 90°, kleiner als 75°, kleiner als 60° oder kleiner als 45° ist, durch das Fächerelement ausgeführt wird und durch die schwenkbare Lagerung um die Schwenkachse und einen etwaigen Antrieb ermöglicht ist. In bestimmten Anwendungsfällen kann das Fächerelement jedoch auch eine Schwenkbewegung über den vollen Winkelumfang von 360° ausführen.

Gemäß einer ersten bevorzugten Ausführungsform ist vorgesehen, dass das Fächerelement eine Fächerfläche aufweist die parallel zur Schwenkachse oder senkrecht zur Auffangfläche verläuft, insbesondere, dass das Fächerelement durch eine Fächerfläche gebildet wird, die parallel zur Schwenkachse oder senkrecht zur Auffangfläche verläuft. Grundsätzlich ist zu verstehen, dass das Fächerelement in verschiedener Ausrichtung angeordnet sein kann, um die gewünschte Luftbewegung zu erzielen. Besonders bevorzugt ist jedoch eine Ausrichtung, bei der das Fächerelement solcherart angeordnet ist, dass eine daran ausgebildete Fächerfläche parallel zur Schwenkachse oder senkrecht zur Auffangfläche verläuft. Diese Ausrichtung kann insbesondere bewirken, dass sich das Fächerelement durch die Schwenkbewegung solcherart bewegt, dass die Bewegungsrichtung senkrecht zur Fächerfläche liegt, also die Luft durch das Fächerelement frontal in Rotationsumfangsrichtung verdrängt wird.

Grundsätzlich ist es bevorzugt, dass das gesamte Fächerelement in solcher Weise senkrecht zur Auffangfläche ausgerichtet ist und bei der Schwenkbewegung auch bleibt. Dies bedeutet, dass das Fächerelement möglicherweise eine elastische Verformung um eine parallel zur Schwenkachse liegende Biegeachse ausführen kann, sich jedoch bevorzugt nicht um gegenüber der Schwenkachse geneigte Achsen verformt. In anderen Anwendungen können jedoch Ausführungsformen zum Einsatz kommen, die ein Fächerelement aufweisen, das Teilabschnitte mit einer nicht parallelen Ausrichtung zur Schwenkachse oder einer nicht senkrechten Ausrichtung zur Auffangfläche aufweisen oder sogar insgesamt nicht in dieser Weise ausgerichtet sind, sondern schräg geneigt in Bezug auf die Schwenkachse oder die Auffangfläche verlaufen. Diese Ausrichtung des Fächerelements oder Flächenanteilen davon kann auch durch eine elastische Verformung im Zuge der Beschleunigungen bei der Schwenk- oder Drehbewegung auftreten, beispielsweise, indem sich das Fächerelement oder Teile davon um eine horizontale Achse verformen oder verschwenken, wenn die Schwenkbewegung ausgeführt wird.

Gemäß einer weiteren bevorzugten Ausführungsform ist vorgesehen, dass die Trocknungsvorrichtung zwischen dem Aufenthaltsbereich und der Auffangfläche angeordnet ist. Generell ist eine solche Anordnung der Trocknungsvorrichtung, also namentlich insbesondere des Fächerelements bzw., wenn vorhanden, der mehreren Fächerelemente, zwischen dem Aufenthaltsbereich und der Auffangfläche bevorzugt, weil hierdurch eine Trocknungswirkung durch Luftbewegung auf den Tierkot von oben herab wirksam erfolgen kann. Weiterhin kann vorhandener Bauraum zwischen der Auffangfläche und dem Tieraufenthaltsbereich für die Trocknungsvorrichtung genutzt werden. Teile der Trocknungsvorrichtung, beispielsweise mit dem Antrieb der Fächerelemente zusammenhängende Teile, können auch an anderer Stelle angeordnet sein und sich nicht zwischen dem Aufenthaltsbereich und der Auffangfläche befinden - dies ist im erfindungsgemäßen Sinne dennoch eine Anordnung der Trocknungsvorrichtung zwischen dem Aufenthaltsbereich und der Auffangfläche. In anderen Ausführungsformen könnte die Trocknungsvorrichtung auch unterhalb der Auffangfläche angeordnet sein und dann mit einer perforierten bzw. luftdurchlässigen Auffangfläche zusammenwirken, um die Trocknung zu bewirken.

Erfindungsgemäß umfasst die Trocknungsvorrichtung eine Antriebseinrichtung, die ausgebildet ist, um das Fächerelement um die Schwenkachse in eine Rotationsbewegung zu versetzen, wobei die Rotationsbewegung eine reziproke Schwenkbewegung um die Schwenkachse ist. Gemäß dieser Fortbildung ist eine Antriebseinrichtung Bestandteil der Trocknungsvorrichtung. Diese Antriebseinrichtung ist dazu ausgebildet, um eine automatisierte Rotationsbewegung des Fächerelements um die Schwenkachse zu erzeugen. Die Antriebseinrichtung kann zu diesem Zweck beispielsweise einen elektrischen Antriebsmotor umfassen, der durch eine entsprechende mechanische Übertragungseinrichtung eine Antriebswirkung auf das Fächerelement oder auf mehrere Fächerelemente überträgt. Bei einer Ausführungsform, die nicht Teil der Erfindung ist, kann die Antriebseinrichtung für eine kontinuierliche Drehbewegung um die Schwenkachse ausgebildet sein, bei dieser Ausgestaltung findet folglich eine Rotationsbewegung über den vollen Kreisumfang in einer konstanten Drehrichtung statt. Erfindungsgemäß ist die Antriebseinrichtung für eine reziproke Schwenkbewegung um die Schwenkachse ausgebildet. Bei dieser Ausgestaltung findet die Rotationsbewegung als Hin- und HerBewegung des Fächerelements statt, bei der das Fächerelement folglich seine Drehrichtung wiederkehrend ändert. Die reziproke Schwenkbewegung kann hierbei über einen kleineren oder größeren Winkelbereich erfolgen oder auch eine vollständige Kreisbewegung über 360° betragen.

Die Antriebseinrichtung kann ausgebildet sein, um mehrere mit ihr mechanisch gekoppelte Fächerelemente in eine synchrone Schwenkbewegung anzutreiben, also eine Schwenkbewegung, bei der die angetriebenen Fächerelemente gleichzeitig die Umkehrpunkte der reziprokalen Bewegung durchlaufen. Alternativ können die Fächerelemente auch phasenversetzt durch die Antriebseinrichtung angetrieben werden, sodass sie nicht alle gleichzeitig die Umkehrpunkte durchlaufen.

Noch weiter ist es bevorzugt, wenn das Fächerelement ein erstes plattenförmiges Element umfasst, das sich ausgehend von der Schwenkachse in einer ersten radialen Längsrichtung erstreckt. Weiterhin kann bevorzugt vorgesehen sein, dass das Fächerelement ein zweites plattenförmiges Element umfasst, das sich ausgehend von der Schwenkachse in einer zweiten radialen Längsrichtung erstreckt, die ausgehend von der Schwenkachse bevorzugt in entgegengesetzter Richtung zur ersten Längsrichtung verläuft. Gemäß diesen beiden Ausführungsformen umfasst das Fächerelement entweder ein oder zwei plattenförmige Elemente, die sich ausgehend von der Schwenkachse in unterschiedlichen radialen Richtungen erstrecken. Im Falle eines einzigen plattenförmigen Elements erstreckt sich das Fächerelement ausgehend von der Schwenkachse in einer einzigen Richtung, im Falle von zwei plattenförmigen Elementen ist es bevorzugt, wenn sich diese plattenförmigen Elemente in zwei entgegengesetzten Richtungen ausgehend von der Schwenkachse erstrecken, folglich das Fächerelement nach Art eines zweiblättrigen Propellers mit Blattlage in Segelstellung aufgebaut ist. Grundsätzlich bevorzugt ist es, dass die plattenförmigen Elemente sich in radialer Richtung um eine größere Länge erstrecken als sie in axialer Richtung eine Breite aufweisen. Dies hat sich als besonders effizient für eine gute Trocknungswirkung erwiesen. Die plattenförmigen Elemente können einen im Wesentlichen rechteckigen Umriss haben, können aber auch einen Umriss mit verrundeten Ecken, einen trapezförmigen oder dreieckigen Umriss haben, um die Fächerwirkung in Abhängigkeit der Umfangsgeschwindigkeit ideal zu gestalten.

Noch weiter ist es bevorzugt, wenn das erste und gegebenenfalls zweite plattenförmige Element ein elastomeres Material umfasst, insbesondere aus einem elastomeren Material ausgebildet ist. Durch die teilweise oder vollständige Ausgestaltung des plattenförmigen Elements aus einem elastomeren Material wird eine günstige elastische Verformung des plattenförmigen Elements bei der Schwenkbewegung ermöglicht. Insbesondere dann, wenn eine reziproke Bewegung des Fächerelements mit sich wiederholender Drehrichtungsumkehr um die Schwenkachse erfolgt, kann durch eine solche elastomere Eigenschaft das notwendige maximale Drehmoment für die Bremsung und Beschleunigung im Umkehrpunkt der reziproken Bewegung abgesenkt werden und hierdurch eine Entlastung der mechanischen Bauteile einer Antriebseinrichtung und der gesamten Befestigungskomponenten für die Trocknungsvorrichtung an der Geflügelhaltungsvorrichtung erzielt werden. Unter einem elastomeren Material ist hierbei ein sich elastisch verhaltendes Material aus der Gruppe der Kunststoffe zu verstehen, welches beispielsweise gummiähnlich oder nach den Eigenschaften eines thermoplastischen Polyurethans ausgebildet ist.

Noch weiter ist es bevorzugt, wenn das erste und gegebenenfalls zweite plattenförmige Element eine elastische Verformbarkeit aufweist, die so ausgebildet ist, dass sich das erste und gegebenenfalls zweite plattenförmige Element unter dem Antrieb durch die Antriebsvorrichtung elastisch verformt. Gemäß dieser Ausführungsform ist die Elastizität des ersten bzw. zweiten plattenförmigen Elements, also das Elastizitätsmodul und die Materialdimensionierung, solcherart gewählt, dass eine elastische Formänderung bei der Bewegung stattfindet, die die Antriebsvorrichtung auf die plattenförmigen Elemente ausübt. Diese elastische Verformung kann einerseits durch den Windwiderstand bei den erzeugten Bewegungsgeschwindigkeiten auftreten, andererseits durch Trägheitsmomente bei der Verzögerung und Beschleunigung in den Umkehrpunkten einer reziproken Schwenkbewegung um die Schwenkachse. Wie zuvor erläutert, ist eine solche elastische Verformung bevorzugt, da sich das System hierdurch weniger steif verhält und daher Kraft- oder Drehmomentspitzen vermieden oder abgesenkt werden können.

Noch weiter ist es bevorzugt, wenn die Antriebsvorrichtung solcherart ausgebildet ist, dass sie das Fächerelement oder gegebenenfalls die Fächerelemente in eine reziprokal ausgebildete Schwenkbewegung antreibt und die Frequenz der Schwenkbewegung in einem Bereich um eine Resonanzfrequenz der Trocknungsvorrichtung, vorzugsweise in einer Resonanzfrequenz der Trocknungsvorrichtung liegt. Gemäß dieser Ausführungsform findet eine reziprokale Schwenkbewegung der Fächerelemente statt, also eine Bewegungsform, welche sich wiederholende Verzögerungen und Beschleunigungen umfasst. Bei einer solchen Bewegungsform findet in allen realen Systemen eine gewisse elastische Verformung statt, insbesondere auch bei der erfindungsgemäßen Trocknungsvorrichtung, die bevorzugt ein oder zwei elastisch sich verformende Plattenelemente aufweist, welche das Fächerelement bilden. Bei solchen auftretenden elastischen Verformungen wird das System durch eine oder mehrere Resonanzfrequenzen charakterisiert. Die Höhe der Resonanzfrequenz(en) ist dabei abhängig von den Steifigkeiten und mechanischen Kopplungsverbindungen des Systems.

Wird ein solches System hinsichtlich der reziprokalen Bewegung mit einer Frequenz angetrieben, die der Resonanzfrequenz entspricht oder die nahe bei der Resonanzfrequenz liegt, beispielsweise in einem Bereich von +/-5 % oder +/-10 % um die Resonanzfrequenz, so ist regelmäßig eine geringe Antriebsleistung notwendig, um die Bewegung durchzuführen. Dies erklärt sich daraus, dass bei Betrieb in der Resonanzfrequenz wenig oder keine Antriebsenergie dazu aufgewendet werden muss, um Komponenten der Trocknungsvorrichtung elastisch zu verformen, sondern vielmehr die durch die Abbremsungen und Beschleunigungen auftretenden elastischen Verformungen die Bewegung unterstützen oder zumindest nicht hemmen.

Der Betrieb in oder nahe bei der Resonanzfrequenz kann sich bei der erfindungsgemäßen Trocknungsvorrichtung beispielsweise dadurch auszeichnen, dass die elastisch verformbaren plattenförmigen Elemente während einer Bewegung in einer ersten Richtung der reziprokalen Bewegung in einer ersten Richtung verformt sind, sich im Umkehrpunkt der reziprokalen Bewegung aus dieser ersten Richtung in eine zweite Richtung verformen und kurz vor oder bei Erreichen der maximalen Verformung in der zweiten Richtung in der anderen, zweiten Richtung der Bewegung der reziprokalen Bewegungsform beschleunigt werden, sodass keine weitere Rückverformung in die erste Verformungsrichtung oder ein Schwingen zwischen der ersten und zweiten Verformungsrichtung im Umkehrpunkt der reziprokalen Bewegung stattfindet.

Häufig weisen elastische Systeme, die einer reziprokalen Bewegungsform ausgesetzt sind, mehr als eine Resonanzfrequenz auf. So kann bei einer anderen Resonanzfrequenz im Umkehrpunkt auch ein zweimaliges Hin- und Herschwingen zwischen der ersten Verformungsrichtung und der zweiten Verformungsrichtung des plattenförmigen Elements stattfinden oder ein dreimaliges Hin- und Herschwingen. Bevorzugt für die Energieeinsparung beim Betrieb der Trocknungsvorrichtung in oder nahe bei einer Resonanzfrequenz ist jedoch, dass während der Bewegung außerhalb der Umkehrpunkte kein oder kein wesentliches Schwingungsverhalten der plattenförmigen Elemente stattfindet.

Gemäß einer weiteren bevorzugten Ausführungsform ist vorgesehen, dass die Antriebsvorrichtung eine Antriebseinheit umfasst, die mittels eines Kopplungselements mit dem Fächerelement mechanisch verbunden ist, wobei das Kopplungselement vorzugsweise eine Seilzugvorrichtung ist. Die Antriebsvorrichtung kann gemäß dieser Ausführungsform insbesondere eine zentrale Antriebseinheit wie einen Elektromotor umfassen, der ein oder mehrere Fächerelemente antreiben kann. Beispielsweise kann vorgesehen sein, dass eine Antriebseinheit für mehrere Ebenen einer gesamten Reihe oder für eine Ebene einer Reihe von Geflügelaufenthaltsbereichen vorgesehen ist und jeweils mehrere Fächerelemente in den / der Ebene(n) in eine Schwenkbewegung um entsprechend mehrere Schwenkachsen antreibt. Das hierzu vorgesehene Kopplungselement kann mehrere einzelne Kopplungskomponenten umfassen, die insbesondere sich längs erstreckende Kopplungskomponenten sind, wie beispielsweise Stangen oder Seilzüge. Dabei kann die Antriebsvorrichtung solcherart gekoppelt sein, dass sie in einer Bewegungsrichtung einer reziproken Bewegung eine Zugkraft überträgt, die gegen ein Federelement wirkt, beispielsweise gegen um jede Schwenkachse separat wirkende Federelemente, die eine Rückstellkraft gegen die Antriebskraft bewirken. In der anderen Bewegungsrichtung kann dann eine Rückstellung durch die Federkraft / Federkräfte erfolgen. In einer anderen Ausführungsform kann das Kopplungselement so ausführt sein, dass es eine Antriebskraft in beiden Bewegungsrichtungen einer reziprokalen Bewegung überträgt.

Noch weiter ist es bevorzugt, wenn sich der Aufenthaltsbereich in einer Reihe entlang einer Längsrichtung erstreckt und die Trocknungsvorrichtung eine Mehrzahl von Fächerelementen umfasst, die jeweils schwenkbar um eine jedem Fächerelement zugeordnete Schwenkachse gelagert sind, wobei die Schwenkachsen in einem Winkel von 45-90° zur Auffangfläche ausgerichtet und in Längsrichtung voneinander beabstandet sind. Gemäß dieser Ausführungsform umfasst die Trocknungsvorrichtung mehrere Fächerelemente und kann hierdurch einen größeren Bereich der Auffangfläche mit einer Trocknungswirkung beaufschlagen. Die Fächerelemente sind dabei in Längsrichtung voneinander beabstandet. Der Abstand zwischen den mehreren Schwenkachsen kann dabei insbesondere solcherart gewählt sein, dass die Trocknungswirkungsbereiche zweier benachbarter Fächerelemente sich geringfügig überschneiden oder unmittelbar aneinandergrenzen, sodass über den gesamten Bereich der Auffangfläche eine Trocknungswirkung erzielt wird. In anderen Ausführungsformen, insbesondere, wenn die Auffangfläche sich relativ zu den Schwenkachsen bewegt wie beispielsweise bei einem Förderband als Auffangfläche, können auch größere Abstände zwischen den Schwenkachsen vorgesehen sein, sodass in Zwischenräumen eine nur verringerte oder keine Trocknungswirkung erzielt wird. Es ist zu verstehen, dass die Schwenkachsen der mehreren Fächerelemente vorzugsweise parallel zueinander verlaufen. Insbesondere ist es bevorzugt, wenn alle Schwenkachsen vertikal verlaufen oder senkrecht zur Auffangfläche ausgerichtet sind.

Gemäß einer weiteren bevorzugten Ausführungsform ist vorgesehen, dass sich die Trocknungsvorrichtung in Längsrichtung erstreckt, insbesondere, dass die Auffangfläche durch ein sich in Längsrichtung erstreckendes Förderelement wie ein Endlosfördertrum gebildet wird. Eine solche geometrische Ausrichtung der Trocknungsvorrichtung ist besonders geeignet, um in Geflügelhaltungsvorrichtungen eingesetzt zu werden, die mehrere Geflügelaufenthaltsbereiche in einer Längsrichtung zueinander in Reihe aufweisen. Die Auffangfläche kann hierbei bevorzugt ein Förderelement wie ein Endlosfördertrum umfassen, das sich ebenfalls in Längsrichtung erstreckt. Hierdurch wird eine Trocknungswirkung entlang der gesamten oder eines großen Teils der Länge der Geflügelaufenthaltsvorrichtung in Längsrichtung erzielt. Das Endlosfördertrum kann insbesondere ein Förderband sein, das an den beiden in Längsrichtung liegenden Enden der Geflügelhaltungsvorrichtung durch Umlenkrollen umgelenkt wird und mit dem der Tierkot gefördert wird. Denkbar sind auch endliche Förderbänder, die als Auffangvorrichtung genutzt werden. Diese werden für den Zweck der Abförderung des Kots an einem Reihenende einer Geflügelaufenthaltsvorrichtung aufgewickelt, wobei dabei der Kot von der Auffangfläche entfernt wird. Anschließend wird das endliche Band wieder abgewickelt, so dass das Band unterhalb des Aufenthaltsbereichs wieder zum Auffangen zur Verfügung steht. Weiterhin kann die Auffangfläche Vorrichtungen aufnehmen, z.B. seilgezogene Schieber- oder Räumelemente, die den Kotabtransport ausführen. In solchen Vorrichtungen wird der Tierkot entweder in Längsrichtung abtransportiert oder 90° zur Längserstreckung, seitlich von den Auffangflächen geschoben.

Gemäß einer weiteren bevorzugten Ausführungsform ist vorgesehen, dass der Geflügelaufenthaltsbereich sich in einer Längsrichtung erstreckt und senkrecht zu der Längsrichtung eine Breite aufweist, die Antriebsvorrichtung ausgebildet ist, um das Fächerelement in eine reziproke Bewegung über einen vorbestimmten Schwenkwinkelbereich anzutreiben, die radial zur Schwenkachse verlaufende Länge des Fächerelements größer ist als die halbe Breite des Geflügelaufenthaltsbereichs, und der vorbestimmte Schwenkwinkelbereich so gewählt ist, dass sich das Fächerelement in keinem Bewegungsabschnitt der reziprokalen Bewegung über die Breite des Geflügelaufenthaltsbereichs hinaus erstreckt.

Grundsätzlich ist zu verstehen, dass es bevorzugt ist, wenn die Dimensionierung des Fächerelements und die Bewegung des Fächerelements durch die Antriebseinrichtung so abgestimmt sind, dass sich das Fächerelement bei seiner Bewegung nicht aus der Geflügelhaltungsvorrichtung heraus erstreckt, um hierdurch eine Verletzungsgefahr für Bedienungspersonal in einem Gang neben der Geflügelhaltungsvorrichtung zu vermeiden. Dies kann zum einen erreicht werden, indem die Länge des Fächerelements radial zur Schwenkachse kleiner ist als die Hälfte der Breite des Geflügelaufenthaltsbereichs und auf diese Weise, bei Anordnung der Schwenkachse in Breitenmitte, zu keinem Zeitpunkt der Schwenkbewegung das Fächerelement aus der Geflügelhaltungsvorrichtung herausragen kann. In anderen Anwendungen, insbesondere, wenn mit einer geringen Anzahl von Fächerelementen eine sich in großer Länge in Längsrichtung erstreckende Geflügelhaltungsvorrichtung mit einer Trocknungswirkung beaufschlagt werden soll, kann es demgegenüber vorteilhaft sein, wenn die Länge des Fächerelements größer als die Hälfte der Breite des Geflügelaufenthaltsbereichs ist, sodass bei einer vollen Umdrehung um die Schwenkachse das Fächerelement in Breitenrichtung aus der Geflügelhaltungsvorrichtung hervorragen würde. In einer solchen Konstellation ist es dann bevorzugt, wenn eine reziprokale Bewegung in einem vorbestimmten Schwenkwinkelbereich erfolgt, der so klein gewählt ist, dass das Fächerelement stets innerhalb der Breite des Geflügelaufenthaltsbereichs bzw. der Breite der Geflügelhaltungsvorrichtung bleibt. Angenähert kann bei dieser Ausführungsform der Schwenkwinkelbereich dem tan⁻¹ des Quotienten aus halber Breite der Geflügelhaltungsvorrichtung zu Länge eines plattenförmigen Elements des Fächerelements betragen, um ein Herausragen des Fächerelements in Breitenrichtung zu verhindern.

Ein weiterer Aspekt der Erfindung ist eine Trocknungsvorrichtung zur Trocknung von auf einer Auffangfläche einer Auffangvorrichtung lagernden Geflügelkots in einer Geflügelhaltungsvorrichtung gemäß der Erfindung, bei der die Trocknungsvorrichtung ein Fächerelement umfasst, das schwenkbar um eine Schwenkachse gelagert ist, die in einem Winkel von 45-90° zur Auffangfläche ausgerichtet ist, wobei vorzugsweise die Trocknungsvorrichtung ausgebildet ist, um zwischen dem Aufenthaltsbereich und der Auffangfläche angeordnet zu werden, und/oder die Trocknungsvorrichtung eine Antriebseinrichtung umfasst, die ausgebildet ist, um das Fächerelement um die Schwenkachse in eine Rotationsbewegung zu versetzen, wobei die Rotationsbewegung eine reziproke Schwenkbewegung um die Schwenkachse ist, und/oder das Fächerelement ein erstes plattenförmiges Element umfasst, das sich ausgehend von der Schwenkachse in einer ersten radialen Längsrichtung erstreckt, und/oder das Fächerelement ein zweites plattenförmiges Element umfasst, das sich ausgehend von der Schwenkachse in einer zweiten radialen Längsrichtung erstreckt, die ausgehend von der Schwenkachse in entgegengesetzter Richtung zur ersten Längsrichtung verläuft, und/oder das erste und gegebenenfalls zweite plattenförmige Element ein elastomeres Material umfasst, insbesondere aus einem elastomeren Material ausgebildet ist, und/oder das erste und gegebenenfalls zweite plattenförmige Element eine elastische Verformbarkeit aufweist, die so ausgebildet ist, dass sich das erste und gegebenenfalls zweite plattenförmige Element unter dem Antrieb durch die Antriebsvorrichtung elastisch verformt, und/oder die Antriebsvorrichtung solcherart ausgebildet ist, dass sie die Trocknungsvorrichtung in eine reziprokal ausgebildete Schwenkbewegung antreibt und die Frequenz der Schwenkbewegung in einem Bereich um eine Resonanzfrequenz der Trocknungsvorrichtung, vorzugsweise in einer Resonanzfrequenz der Trocknungsvorrichtung liegt, und/oder die Antriebsvorrichtung eine Antriebseinheit umfasst, die mittels eines Kopplungselements mit der Trocknungsvorrichtung mechanisch verbunden ist, wobei das Kopplungselement vorzugsweise eine Seilzugvorrichtung ist, und/oder die Trocknungsvorrichtung eine Mehrzahl von Fächerelementen umfasst, die jeweils schwenkbar um eine jedem Fächerelement zugeordnete Schwenkachse gelagert sind, wobei die Schwenkachsen in einem Winkel von 45-90° zur Auffangfläche ausgerichtet und in einer Längsrichtung voneinander beabstandet sind und ausgebildet ist um unterhalb eines Tieraufenthaltsbereich eingebaut zu werden, der sich in einer Reihe entlang der Längsrichtung erstreckt, und/oder der Geflügelaufenthaltsbereich sich in einer Längsrichtung erstreckt und senkrecht zu der Längsrichtung eine Breite aufweist, die Antriebsvorrichtung ausgebildet ist, um das Fächerelement in eine reziproke Bewegung über einen vorbestimmten Schwenkwinkelbereich anzutreiben, die radial zur Schwenkachse verlaufende Länge des Fächerelements größer ist als die Breite des Geflügelaufenthaltsbereichs, und der vorbestimmte Schwenkwinkelbereich so gewählt ist, dass sich das Fächerelement in keinem Bewegungsabschnitt der reziproken Bewegung über die Breite des Geflügelaufenthaltsbereich hinaus erstreckt.

Eine solche Trocknungsvorrichtung kann dazu eingesetzt werden, um eine Geflügelhaltungsvorrichtung mit einer wirksamen Tierkottrocknung auszurüsten. Insbesondere kann eine solche Trocknungsvorrichtung zur Nachrüstung an einer bestehenden Tierhaltungsvorrichtung eingesetzt werden. Die Trocknungsvorrichtung kann dabei mit den Merkmalen der Trocknungsvorrichtung der zuvor beschriebenen Tierhaltungsvorrichtung fortgebildet werden, und in Bezug auf die Varianten und Vorteile dieser Merkmale wird auf die voranstehende Beschreibung Bezug genommen.

Eine bevorzugte Ausführungsform der Erfindung wird anhand der beiliegenden Figuren erläutert. Es zeigen:
- Fig. 1: eine Frontalansicht einer erfindungsgemäßen Geflügelhaltungsvorrichtung,
- Fig. 2: eine perspektivische Ansicht der Geflügelhaltungsvorrichtung gemäß Fig. 1 in einer Teildarstellung wesentlicher mit der installierten Trocknungsvorrichtung zusammenhängender Bauteile
- Fig. 3A: eine detaillierte perspektivische Teilansicht des in Fig. 2 eingegrenzten Bereichs A
- Fig. 3B: eine Seitenansicht des Ausschnitts gemäß Fig. 3A,
- Fig. 4: eine detaillierte perspektivische Teilansicht des in Fig. 2 eingegrenzten Bereichs B, und
- Fig. 5: eine detaillierte perspektivische Teilansicht des in Fig. 2 eingegrenzten Bereichs C.

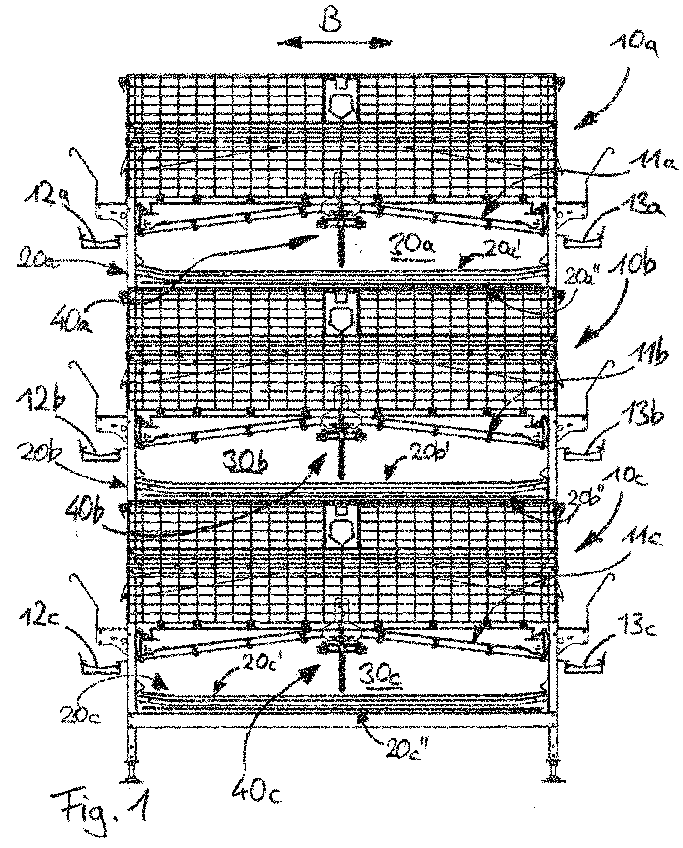

Bezugnehmend zunächst auf Fig. 1 umfasst eine erfindungsgemäße bevorzugte Ausführungsform drei Geflügelaufenthaltsbereiche 10a,b,c, die vertikal zueinander gestaffelt sind. Jeder Geflügelaufenthaltsbereich 10a,b,c weist nach Art eines flach geneigten Giebeldaches ausgeformte Aufstandsflächen 11a, b, c auf, die ausgehend von der Mittellängsachse zu den Seiten hin schräg nach unten geneigt verlaufen. Diese geneigten Aufstandsflächen dienen als Standfläche für Hühner im Tieraufenthaltsbereich und bewirken, dass innerhalb der Tieraufenthaltsbereiche gelegte Eier zu den beiden Seiten in Eierbänder 12a, b, c, 13a, b, c abrollen und dort gesammelt werden können.

Die Tieraufstandsflächen 11a, b, c sind als Gitterroste ausgebildet und daher für Kot, den die Tiere absetzen, die darauf oder darüber stehen, durchlässig. Unterhalb jeder Tieraufstandsfläche 11a, b, c ist ein Kotband 20a, b, c angeordnet, das als Endlosförderband in Längsrichtung, also entlang der Längsachse L eine Förderbewegung ausführt. Auf der nach oben weisenden Oberfläche des Obertrums 20a',b',c' dieses Kotbandes 20a, b, c sammelt sich der herabfallende Tierkot. Unterhalb einer Querstrebeneebene wird das Kotband als Untertrum 20a", b", c" in entgegengesetzter Längsrichtung zurückgeführt.

Zwischen der Tieraufstandsfläche 11a, b, c und dem Kotband 20a, b, c ist ein Freiraum 30a, b, c vorhanden. In diesem Freiraum 30a, b, c ist eine Trocknungsvorrichtung 40a, b, c angeordnet und kann sich darin bewegen.

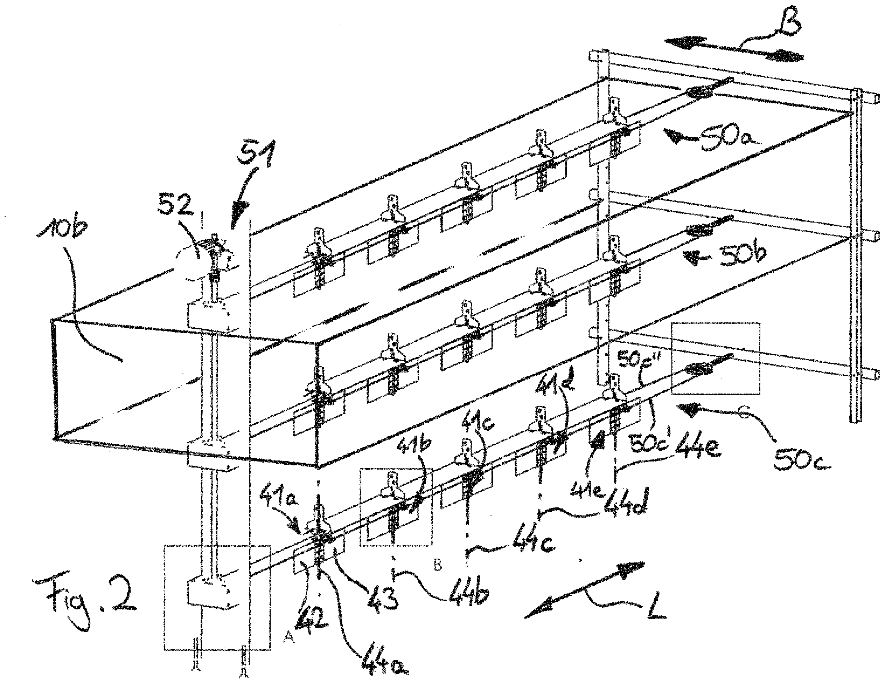

Fig. 2 zeigt die Trocknungsvorrichtung 40a, b, c der Tierhaltungsvorrichtung gemäß Fig. 1. In Fig. 2 sind wesentliche Teile der Tieraufenthaltsbereiche, wie beispielsweise die Tieraufstandsflächen 11a, b, c, die den Tieraufenthaltsbereich begrenzenden Seitenwände, Eiersammelbänder und verschiedene Rahmengestellteile nicht abgebildet, um die Einzelteile der Trocknungsvorrichtung besser erkennbar zu machen. Schematisch ist lediglich der mittlere Tieraufenthaltsbereich 10b als quaderförmiger Raum eingezeichnet.

Die Trocknungsvorrichtung wird hinsichtlich ihres Detailaufbaus in jeder einzelnen Ebene anhand der untersten Ebene nachfolgend erläutert. Die Trocknungsvorrichtung 40a, b, c umfasst in jeder Ebene der Tierhaltungsvorrichtung eine Mehrzahl von Fächerelementen 41a-e.

Jedes Fächerelement 41a-e umfasst zwei plattenförmige Komponenten 42, 43, die sich ausgehend von einer Schwenkachse 44a-e in radialer Richtung erstrecken. Diese Schwenkachsen 44a-e sind in Längsrichtung voneinander beabstandet und liegen in einer Linie, die sich in Längsrichtung L erstreckt.

Die plattenförmigen Elemente 42, 43 liegen in einer vertikalen Ebene. Die Schwenkachsen 44a-e sind vertikal ausgerichtet. Die Schwenkachsen 44a-e verlaufen daher parallel zu den Flächen der plattenförmigen Komponenten 42, 43. Beide plattenförmigen Komponenten 42, 43 sind in axialer und radialer Richtung in Bezug auf die Schwenkachsen 44a-e gleich lang dimensioniert.

In Fig. 2 sind die durch die plattenförmigen Komponenten 42, 43 gebildeten Fächerelemente in einer Ausrichtung gezeigt, in der sie parallel zur Längsrichtung L liegen. Aus dieser Ausrichtung können die Fächerelemente um die Schwenkachsen 44a-e verschwenkt werden. Hierzu ist ein Seilzugmechanismus 50a-c in jeder der drei Ebenen vorgesehen.

Der Seilzugmechanismus 50a-c dient als Kopplung an eine Antriebseinheit 51. Diese Antriebseinheit 51 umfasst einen Elektromotor 52, der eine senkrecht stehende Welle 53 antreibt und in eine kontinuierliche Drehbewegung versetzt.

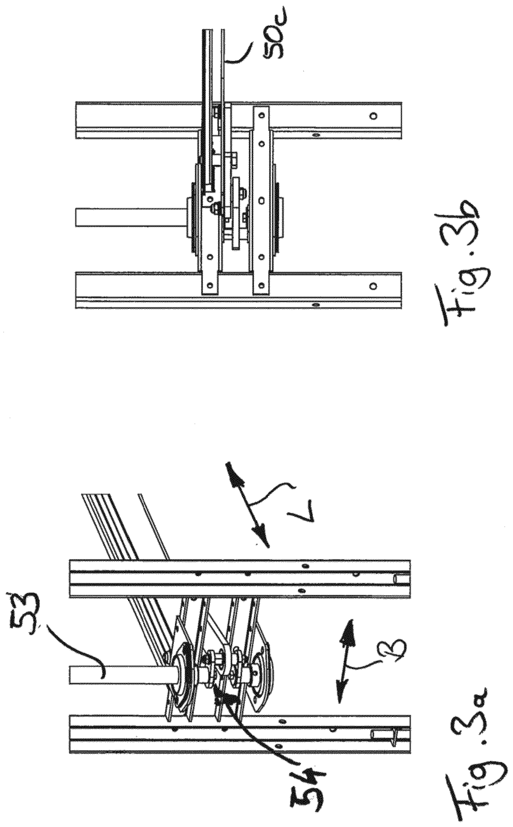

Fig. 3A zeigt ein Kurbelgetriebe 54, welches die kontinuierliche Drehbewegung der Welle 53 in eine reziproke Zugbewegung der Seilzugvorrichtung 50a, b, c umsetzt. Mittels des Kurbelgetriebes 54 wird die kontinuierliche Drehbewegung der Antriebswelle 53 in eine reziproke Bewegung der Seilzüge 50a - c übersetzt. Hierdurch bewegt sich der als umlaufender Seilzug 50a, b, c gestaltete Übertragungsmechanismus so, dass in regelmäßiger Abfolge der eine Seilzugabschnitt 50c' der am hinteren Ende umgelenkten Seilzugschlaufe in einer ersten Längsrichtung gezogen und der andere Seilabschnitt 50c" entgegengesetzt hierzu in einer zweiten Längsrichtung bewegt wird und sich diese Bewegungsform dann umkehrt und der eine Seilzug 50c' in der zweiten Längsrichtung bewegt wird und sich der andere Seilzug 50c" in der ersten Längsrichtung bewegt.

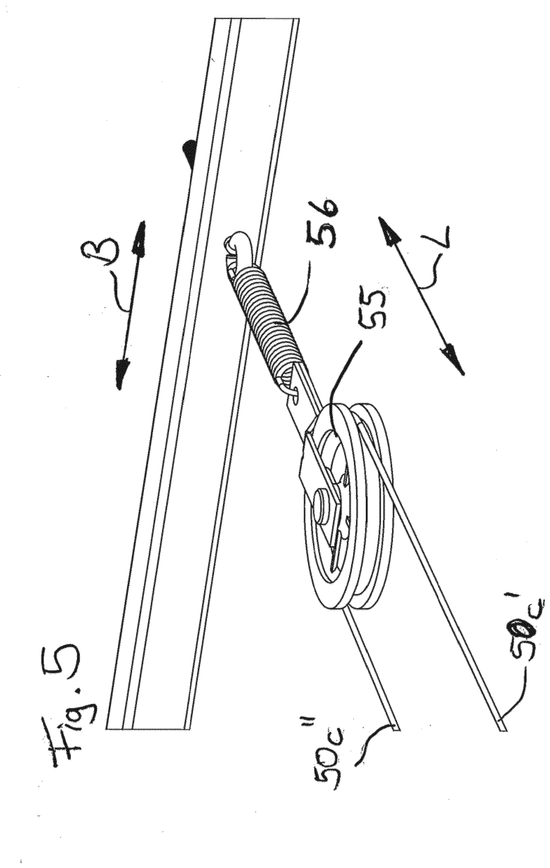

Fig. 5 zeigt die Umlenkung des einen Seilabschnitts 50c'in den anderen Seilabschnitt 50c" mittels einer Umlenkrolle 55, deren vertikale ausgerichtete Drehachse über eine Zugfeder 56 an einer Querstrebe am in Längsrichtung hinteren Ende der Tierhaltungsvorrichtung befestigt ist. Mittels der federgespannten Umlenkrolle 55 wird das Seilzugsystem 50c mit einer Vorspannung beaufschlagt und dadurch straff gehalten.

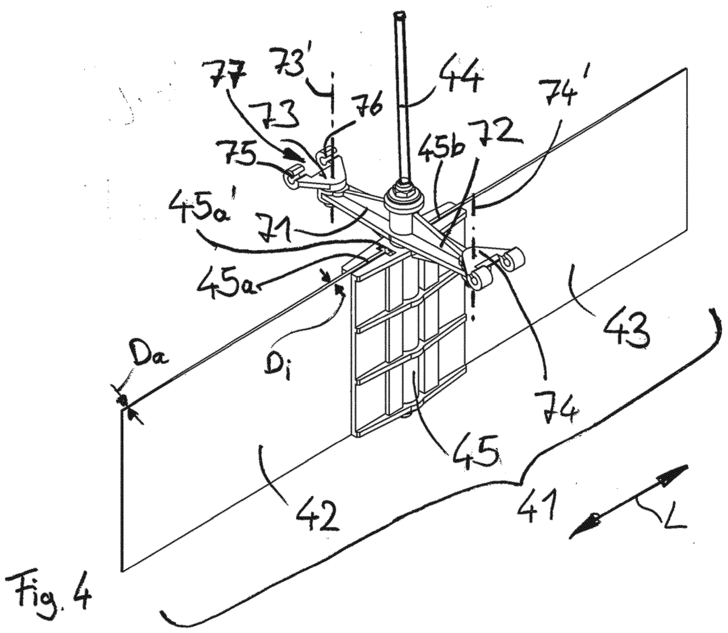

Fig. 4 zeigt ein Fächerelement 41. Das Fächerelement umfasst eine im Bereich der Schwenkachse 44 ausgebildete Befestigungsvorrichtung 45, welche das plattenförmige Element 42 in einem Schlitz 45a auf der einen Seite der Schwenkachse 44 aufnimmt und das plattenförmige Element 43 in einem hierzu in Bezug auf die Schwenkachse 44 gegenüberliegenden Schlitz 45b aufnimmt. Die plattenförmigen Elemente 42, 43 sind an ihrem zur Schwenkachse 44 liegenden Ende mit einem Quersteg versehen und hierdurch jeweils formschlüssig in einer entsprechenden Nut 45a' im Befestigungselement 45 formschlüssig verankert und daran gehindert, in radialer Richtung in Bezug auf die Schwenkachse 44 aus dem Schlitz herauszurutschen.

Die plattenförmigen Elemente 42, 43 können aus thermoplastischen Elastomeren, z.B. Polyamid, Polyethylen, Polypropylen oder entsprechenden darauf basierenden Gemischen gefertigt und dadurch sowohl elastisch verformbar, als auch widerstandsfähig gegen Chemikalien und entsprechend wenig anfällig gegen Materialermüdung im Dauerbetrieb sein. Die Materialstärke der plattenförmigen Elemente verjüngt sich in der Richtung nach radial auswärts von einer Dicke radial innen Dᵢ zu einer Dicke radial außen Dₐ, um ein gleichmäßiges Biegeverhalten der plattenförmigen Elemente zu erhalten. Bei der reziprokalen Schwenkbewegung, welche das Fächerelement 41 ausführt, verformen sich die plattenförmigen Elemente 42, 43 um vertikale Biegeachsen, also parallel zur Schwenkachse 44 verlaufende Biegeachsen.

Am obenliegenden Ende der Befestigungsvorrichtung 45 und mit dieser drehmomentfest verbunden sind zwei Auslegerarme 71, 72. Die Auslegerarme 71, 72 erstrecken sich senkrecht zur Ebene der plattenförmigen Elemente 42, 43 in radialer Richtung beidseits zur Schwenkachse 44. An ihrem radial auswärts liegenden Ende ist an jedem der beiden Auslegerarme 71, 72 eine Seilzugaufnahme 73, 74 drehbar um eine vertikale Achse 73', 74' gelagert befestigt. Jede der beiden Seilzugaufnahmen 73, 74 weist einen Seilaufnahmeabschnitt auf, in dem ein Zugseil, das sich senkrecht zur Schwenkachse 44 erstreckt, befestigt werden kann. Bei der abgebildeten Ausführungsform ist dies durch zwei voneinander in Längsrichtung des aufzunehmenden Seils beabstandete Seilaufnahmeabschnitte 75, 76 verwirklicht, zwischen denen in einem Zwischenraum 77 ein Seilklemmmechanismus auf dem Seil fest fixiert werden kann, der bewirkt, dass sich das Seil nicht in Längsrichtung innerhalb der Seilaufnahmevorrichtungen 73, 74 bewegen kann.

Durch wechselweises Ziehen mittels des Seilzugs 50c an den Auslegerarmen 71, 72 kann das Fächerelement in eine reziprokal ausgeführte Fächerbewegung versetzt werden, bei der die plattenförmigen Komponenten 42, 43 nach Art eines Fächers in einem vorbestimmten Winkelbereich bewegt werden und hierdurch Trocknungsluft fächern. Diese Trocknungsluft bewirkt eine effiziente Trocknung des Tierkots auf dem darunterliegenden Obertrum des Kotbandes.

Die Länge der plattenförmigen Elemente 42, 43 in radialer Richtung ist bei der dargestellten Ausführungsform so gewählt, dass sie kleiner ist als die Hälfte der Breite der Tierhaltungsvorrichtung in Breitenrichtung B ist. Hierdurch kann selbst bei einem Schwenkwinkel von 180°, bei dem die Fächerelemente also um +/- 90° gegenüber der den Figuren dargestellten Position reziprokal verschwenkt werden, kein Fächerelement in einen Bereich außerhalb der Tierhaltungsvorrichtung gelangen. Grundsätzlich ist zu verstehen, dass die Länge der plattenartigen Elemente 42, 43 auch größer als die Hälfte der Breite der Tierhaltungsvorrichtung ausgeführt sein kann. In einem solchen Fall ist es bevorzugt, einen Schwenkwinkel von beispielsweise nur 90°, also +/- 45° um die in den Figuren dargestellte Mittellagenposition auszuführen und hierdurch ein Herausragen der plattenförmigen Elemente 42, 43 in den Umkehrpunkten der Schwenkbewegung zu vermeiden.

## Patentansprüche

1. Geflügelhaltungsvorrichtung, umfassend
- einen Aufenthaltsbereich für das Geflügel,
- eine unterhalb des Aufenthaltsbereichs angeordnete Auffangvorrichtung mit einer Auffangfläche für Geflügelkot
- eine Trocknungsvorrichtung, die ausgebildet ist, um den Geflügelkot auf der Auffangvorrichtung zu trocknen, und die ein Fächerelement umfasst, das schwenkbar um eine Schwenkachse gelagert ist, die in einem Winkel von 45-90° zur Auffangfläche ausgerichtet ist,
wobei die Trocknungsvorrichtung eine Antriebseinrichtung umfasst, die ausgebildet ist, um das Fächerelement um die Schwenkachse in eine Rotationsbewegung zu versetzen, **dadurch gekennzeichnet, dass** die Rotationsbewegung eine reziproke Schwenkbewegung um die Schwenkachse ist.

2. Geflügelhaltungsvorrichtung nach Anspruch 1,
**dadurch gekennzeichnet, dass** das Fächerelement eine Fächerfläche aufweist die parallel zur Schwenkachse oder senkrecht zur Auffangfläche verläuft, insbesondere, dass das Fächerelement durch eine Fächerfläche gebildet wird, die parallel zur Schwenkachse oder senkrecht zur Auffangfläche verläuft.

3. Geflügelhaltungsvorrichtung nach Anspruch 1 oder 2,
**dadurch gekennzeichnet, dass** die Trocknungsvorrichtung zwischen dem Aufenthaltsbereich und der Auffangfläche angeordnet ist.

4. Geflügelhaltungsvorrichtung nach einem der vorhergehenden Ansprüche,
**dadurch gekennzeichnet, dass** das Fächerelement ein erstes plattenförmiges Element umfasst, das sich ausgehend von der Schwenkachse in einer ersten radialen Längsrichtung erstreckt.

5. Geflügelhaltungsvorrichtung nach dem vorhergehenden Anspruch,
**dadurch gekennzeichnet, dass** das Fächerelement ein zweites plattenförmiges Element umfasst, das sich ausgehend von der Schwenkachse in einer zweiten radialen Längsrichtung erstreckt, die ausgehend von der Schwenkachse in entgegengesetzter Richtung zur ersten Längsrichtung verläuft.

6. Geflügelhaltungsvorrichtung nach einem der vorhergehenden Ansprüche 5 oder 6,
**dadurch gekennzeichnet, dass** das erste und gegebenenfalls zweite plattenförmige Element ein elastomeres Material umfasst, insbesondere aus einem elastomeren Material ausgebildet ist.

7. Geflügelhaltungsvorrichtung nach einem der vorhergehenden Ansprüche 4, 5 oder 6,
**dadurch gekennzeichnet, dass** das erste und gegebenenfalls zweite plattenförmige Element eine elastische Verformbarkeit aufweist, die so ausgebildet ist, dass sich das erste und gegebenenfalls zweite plattenförmige Element unter dem Antrieb durch die Antriebsvorrichtung elastisch verformt.

8. Geflügelhaltungsvorrichtung nach Anspruch 3 oder 7,
**dadurch gekennzeichnet, dass** die Antriebsvorrichtung solcherart ausgebildet ist, dass sie das Fächerelement in eine reziprokal ausgebildete Schwenkbewegung antreibt und die Frequenz der Schwenkbewegung in einem Bereich um eine Resonanzfrequenz der Trocknungsvorrichtung, vorzugsweise in einer Resonanzfrequenz der Trocknungsvorrichtung liegt.

9. Geflügelhaltungsvorrichtung nach Anspruch 3, 7 oder 8,
**dadurch gekennzeichnet, dass** die Antriebsvorrichtung eine Antriebseinheit umfasst, die mittels einem Kopplungselement mit dem Fächerelement mechanisch verbunden ist, wobei das Kopplungselement vorzugsweise eine Seilzugvorrichtung ist.

10. Geflügelhaltungsvorrichtung nach einem der vorhergehenden Ansprüche,
**dadurch gekennzeichnet, dass** sich der Aufenthaltsbereich in einer Reihe entlang einer Längsrichtung erstreckt und die Trocknungsvorrichtung eine Mehrzahl von Fächerelementen umfasst, die jeweils schwenkbar um eine jedem Fächerelement zugeordnete Schwenkachse gelagert sind, wobei die Schwenkachsen in einem Winkel von 45-90° zur Auffangfläche ausgerichtet und in Längsrichtung voneinander beabstandet sind.

11. Geflügelhaltungsvorrichtung nach einem der vorhergehenden Ansprüche,
**dadurch gekennzeichnet, dass** sich die Trocknungsvorrichtung in Längsrichtung erstreckt, insbesondere, dass die Auffangfläche durch ein sich in Längsrichtung erstreckendes Förderelement wie ein Endlosfördertrum gebildet wird.

12. Geflügelhaltungsvorrichtung nach einem der vorhergehenden Ansprüche,
**dadurch gekennzeichnet, dass**
- der Geflügelaufenthaltsbereich sich in einer Längsrichtung erstreckt und senkrecht zu der Längsrichtung eine Breite aufweist,
- die Antriebsvorrichtung ausgebildet ist, um das Fächerelement in eine reziproke Bewegung über einen vorbestimmten Schwenkwinkelbereich anzutreiben,
- die radial zur Schwenkachse verlaufende Länge des Fächerelements größer ist als die halbe Breite des Geflügelaufenthaltsbereichs, und
- der vorbestimmte Schwenkwinkelbereich so gewählt ist, dass sich das Fächerelement in keinem Bewegungsabschnitt der reziprokalen Bewegung über die Breite des Geflügelaufenthaltsbereichs hinaus erstreckt.

13. Trocknungsvorrichtung zur Trocknung von auf einer Auffangfläche einer Auffangvorrichtung lagernden Geflügelkots in einer Geflügelhaltungsvorrichtung nach einem der vorhergehenden Ansprüche, wobei
- die Trocknungsvorrichtung ein Fächerelement umfasst, das schwenkbar um eine Schwenkachse gelagert ist, die in einem Winkel von 45-90° zur Auffangfläche ausgerichtet ist, wobei die Trocknungsvorrichtung eine Antriebseinrichtung umfasst, die ausgebildet ist, um das Fächerelement um die Schwenkachse in eine Rotationsbewegung zu versetzen, wobei die Rotationsbewegung eine reziproke Schwenkbewegung um die Schwenkachse ist,
wobei vorzugsweise
- die Trocknungsvorrichtung ausgebildet ist, um zwischen dem Aufenthaltsbereich und der Auffangfläche angeordnet zu werden, und/oder
- das Fächerelement ein erstes plattenförmiges Element umfasst, das sich ausgehend von der Schwenkachse in einer ersten radialen Längsrichtung erstreckt, und/oder
- das Fächerelement ein zweites plattenförmiges Element umfasst, das sich ausgehend von der Schwenkachse in einer zweiten radialen Längsrichtung erstreckt, die ausgehend von der Schwenkachse in entgegengesetzter Richtung zur ersten Längsrichtung verläuft, und/oder
- das erste und gegebenenfalls zweite plattenförmige Element ein elastomeres Material umfasst, insbesondere aus einem elastomeren Material ausgebildet ist, und/oder
- das erste und gegebenenfalls zweite plattenförmige Element eine elastische Verformbarkeit aufweist, die so ausgebildet ist, dass sich das erste und gegebenenfalls zweite plattenförmige Element unter dem Antrieb durch die Antriebsvorrichtung elastisch verformt, und/oder
- die Antriebsvorrichtung solcherart ausgebildet ist, dass sie die Trocknungsvorrichtung in eine reziprokal ausgebildete Schwenkbewegung antreibt und die Frequenz der Schwenkbewegung in einem Bereich um eine Resonanzfrequenz der Trocknungsvorrichtung, vorzugsweise in einer Resonanzfrequenz der Trocknungsvorrichtung liegt, und/oder
- die Antriebsvorrichtung eine Antriebseinheit umfasst, die mittels eines Kopplungselementes mit der Trocknungsvorrichtung mechanisch verbunden ist, wobei das Kopplungselement vorzugsweise eine Seilzugvorrichtung ist, und/oder
- die Trocknungsvorrichtung eine Mehrzahl von Fächerelementen umfasst, die jeweils schwenkbar um eine jedem Fächerelement zugeordnete Schwenkachse gelagert sind, wobei die Schwenkachsen in einem Winkel von 45-90° zur Auffangfläche ausgerichtet und in einer Längsrichtung voneinander beabstandet sind und ausgebildet ist um unterhalb eines Tieraufenthaltsbereich eingebaut zu werden, der sich in einer Reihe entlang der Längsrichtung erstreckt, und/oder
- der Geflügelaufenthaltsbereich sich in einer Längsrichtung erstreckt und senkrecht zu der Längsrichtung eine Breite aufweist, die Antriebsvorrichtung ausgebildet ist, um das Fächerelement in eine reziproke Bewegung über einen vorbestimmten Schwenkwinkelbereich anzutreiben, die radial zur Schwenkachse verlaufende Länge des Fächerelements größer ist als die Breite des Geflügelaufenthaltsbereichs, und der vorbestimmte Schwenkwinkelbereich so gewählt ist, dass sich das Fächerelement in keinem Bewegungsabschnitt der reziproken Bewegung über die Breite des Geflügelaufenthaltsbereich hinaus erstreckt.

## Claims

1. Poultry housing device comprising
- a staying area for the poultry,
- a collection device located below the staging area with a collection surface for poultry droppings
- a drying device adapted to dry the poultry droppings on the collection device and comprising a fan member pivotally mounted about a pivot axis oriented at an angle of 45-90° to the collection surface,
wherein the drying apparatus comprises a driving device adapted to impart a rotational movement to the fan member about the pivot axis, **characterized in that** the rotational movement is a reciprocal pivotal movement about the pivot axis.

2. The poultry housing device of claim 1,
**characterized in that** the fan member has a fan surface which runs parallel to the pivot axis or perpendicular to the collecting surface, in particular that the fan member is formed by a fan surface which runs parallel to the pivot axis or perpendicular to the collecting surface.

3. Poultry housing device according to claim 1 or 2,
**characterized in that** the drying device is arranged between the staying area and the collection area.

4. Poultry housing device according to any one of the preceding claims,
**characterized in that** the fan member comprises a first plate-shaped element extending from the pivot axis in a first radial longitudinal direction.

5. A poultry housing device according to the preceding claim,
**characterized in that** the fan member comprises a second plate-shaped element extending from the pivot axis in a second radial longitudinal direction extending from the pivot axis in the opposite direction to the first longitudinal direction.

6. A poultry housing device according to any one of the preceding claims 5 or 6,
**characterized in that** the first and optionally second plate-shaped element comprises an elastomeric material, in particular is formed from an elastomeric material.

7. The poultry housing device of any one of preceding claims 4, 5, or 6,
**characterized in that** the first and, if applicable, second plate-shaped element has an elastic deformability which is designed such that the first and, if applicable, second plate-shaped element deforms elastically under the drive by the drive device.

8. A poultry housing device according to claim 3 or 7,
**characterized in that** the drive device is designed in such a way that it drives the fan member in a reciprocally designed pivoting movement and the frequency of the pivoting movement lies in a range around a resonant frequency of the drying device, preferably in a resonant frequency of the drying device.

9. The poultry housing device of claim 3, 7, or 8,
**characterized in that** the drive device comprises a drive unit which is mechanically connected to the fan member by means of a coupling element, the coupling element preferably being a cable pull device.

10. Poultry housing device according to any one of the preceding claims,
**characterized in that** the staying area extends in a row along a longitudinal direction and the drying device comprises a plurality of fan members each pivotally mounted about a pivot axis associated with each fan member, the pivot axes being oriented at an angle of 45-90° with respect to the staying area and spaced from each other in the longitudinal direction.

11. Poultry housing device according to any one of the preceding claims,
**characterized in that** the drying device extends in the longitudinal direction, in particular **in that** the collecting surface is formed by a conveying element extending in the longitudinal direction, such as an endless conveying run.

12. Poultry housing device according to any one of the preceding claims,
**characterized in that**
- the poultry housing area extends in a longitudinal direction and has a width perpendicular to the longitudinal direction,
- the drive device is adapted to drive the fan member into reciprocal motion over a predetermined pivot angle range,
- the length of the fan member extending radially to the pivot axis is greater than half the width of the poultry housing area, and
- the predetermined pivot angle range is selected such that the fan member does not extend beyond the width of the poultry housing area in any movement section of the reciprocal movement.

13. A drying device for drying poultry droppings stored on a collecting surface of a collecting device in a poultry housing device according to any one of the preceding claims, wherein
- the drying device comprises a fan member pivotally mounted about a pivot axis oriented at an angle of 45-90° to the collecting surface, the drying device comprises driving device adapted to impart a rotational motion to the fan member about the pivot axis, the rotational motion being a reciprocal pivotal motion about the pivot axis, Wherein preferably
- the drying device is designed to be placed between the staying area and the collecting surface, and/or
- the fan member comprises a first plate-shaped element extending from the pivot axis in a first radial longitudinal direction, and/or
- the fan member comprises a second plate-shaped element which, starting from the pivot axis, extends in a second radial longitudinal direction which, starting from the pivot axis, runs in the opposite direction to the first longitudinal direction, and/or
- the first and optionally second plate-shaped element comprises an elastomeric material, in particular is formed from an elastomeric material, and/or
- the first and, if applicable, second plate-shaped element has an elastic deformability which is designed such that the first and, if applicable, second plate-shaped element deforms elastically under the drive by the drive device, and/or
- the driving device are designed in such a way that it drives the drying device in a reciprocally designed pivoting movement and the frequency of the pivoting movement lies in a range around a resonance frequency of the drying device, preferably in a resonance frequency of the drying device, and/or
- the driving device comprises a drive unit which is mechanically connected to the drying device by means of a coupling element, the coupling element preferably being a cable pull device, and/or
- the drying device comprises a plurality of fan elements each pivotally mounted about a pivot axis associated with each fan element, the pivot axes being aligned at an angle of 45-90° to the collecting surface and spaced from each other in a longitudinal direction and adapted to be installed below an poultry staying area extending in a row along the longitudinal direction, and/or
- said poultry staying area extends in a longitudinal direction and has a width perpendicular to said longitudinal direction, said driving device is adapted to drive said fan member into reciprocal motion over a predetermined pivot angle range, the length of said fan member extending radially to said pivot axis is greater than the width of said poultry housing area, and said predetermined pivot angle range is selected such that said fan member does not extend beyond the width of said poultry housing area in any portion of said reciprocal motion.

## Revendications

1. Dispositif d'élevage de volailles, comprenant
- une zone de séjour pour les volailles,
- un dispositif de récupération disposé en-dessous de la zone de séjour et comportant une surface de récupération de fientes de volailles,
- un dispositif de séchage qui est conçu pour sécher les fientes de volailles sur le dispositif de récupération et qui comporte un élément à compartiments qui s'appuie de manière pivotable autour d'un axe de pivotement qui est orienté suivant un angle de 45 à 90° par rapport à la surface de récupération,
dans lequel le dispositif de séchage comprend un dispositif d'entraînement qui est conçu pour mettre l'élément à compartiments en mouvement rotatif autour de l'axe de pivotement, **caractérisé en ce que** le mouvement rotatif est un mouvement pivotant réciproque autour de l'axe de pivotement.

2. Dispositif d'élevage de volailles selon la revendication 1,
**caractérisé en ce que** l'élément à compartiments présente une surface de compartiments qui s'étend parallèlement à l'axe de pivotement ou perpendiculairement à la surface de récupération, en particulier que l'élément à compartiments est constitué par une surface à compartiments qui s'étend parallèlement à l'axe de pivotement ou perpendiculairement à la surface de récupération.

3. Dispositif d'élevage de volailles selon la revendication 1 ou 2,
**caractérisé en ce que** le dispositif de séchage est disposé entre la zone de séjour et la surface de récupération.

4. Dispositif d'élevage de volailles selon une des revendications précédentes,
**caractérisé en ce que** l'élément à compartiments comprend un premier élément en forme de plaque qui s'étend dans un premier sens longitudinal radial à partir de l'axe de pivotement.

5. Dispositif d'élevage de volailles selon la revendication précédente,
**caractérisé en ce que** l'élément à compartiments comprend un second élément en forme de plaque qui s'étend dans un second sens longitudinal radial qui s'étend depuis l'axe de pivotement dans le sens opposé au premier sens longitudinal à partir de l'axe de pivotement.

6. Dispositif d'élevage de volailles selon une des revendications précédentes 5 ou 6,
**caractérisé en ce que** le premier et éventuellement le second élément en forme de plaque comprend un matériau élastomère, est en particulier composé d'un matériau élastomère.

7. Dispositif d'élevage de volailles une des revendications précédentes 4, 5 ou 6,
**caractérisé en ce que** le premier et éventuellement le second élément en forme de plaque présente une déformabilité élastique qui est conçue pour que le premier et éventuellement le second élément en forme de plaque se déforme élastiquement sous l'effet de l'entraînement par le dispositif d'entraînement.

8. Dispositif d'élevage de volailles selon la revendication 3 ou 7,
**caractérisé en ce que** le dispositif d'entraînement est réalisé de manière à entraîner l'élément à compartiments dans un mouvement pivotant effectué en réciprocité et que la fréquence du mouvement pivotant se situe dans une plage autour de la fréquence de résonance du dispositif de séchage, de préférence dans une fréquence de résonance du dispositif de séchage.

9. Dispositif d'élevage de volailles selon la revendication 3, 7 ou 8,
**caractérisé en ce que** le dispositif d'entraînement comprend une unité d'entraînement qui est connectée mécaniquement au moyen d'un élément de couplage à l'élément à compartiments, l'élément de couplage étant de préférence un dispositif à câble.

10. Dispositif d'élevage de volailles selon une des revendications précédentes,
**caractérisé en ce que**
la zone de séjour des volailles s'étend en rangée dans un sens longitudinal et que le dispositif de séchage comprend une pluralité d'éléments à compartiments qui s'appuient respectivement de manière pivotable autour d'un axe de pivotement associé à chaque élément à compartiments, les axes de pivotement étant orientés suivant un angle de 45 à 90° par rapport à la surface de récupération et espacés les uns des autres dans le sens longitudinal.

11. Dispositif d'élevage de volailles selon une des revendications précédentes,
**caractérisé en ce que** le dispositif de séchage s'étend dans le sens longitudinal, en particulier que la surface de récupération est constituée par un élément de transport s'étendant dans le sens longitudinal comme une tour de convoyage continu.

12. Dispositif d'élevage de volailles selon une des revendications précédentes,
**caractérisé en ce que**
- la zone de séjour des volailles s'étend en rangée dans un sens longitudinal et présente une largeur perpendiculairement au sens longitudinal,
- le dispositif d'entraînement est conçu pour entraîner l'élément à compartiments dans un mouvement réciproque sur une plage angulaire de pivotement prédéfinie,
- la longueur s'étendant radialement par rapport à l'axe de pivotement de l'élément à compartiments est supérieure à la moitié de la largeur de la zone de séjour des volailles, et
- la plage angulaire de pivotement prédéfinie est sélectionnée de manière à ce que l'élément à compartiments ne s'étende, dans aucune section de mouvement du mouvement réciproque, au-delà de la largeur de la zone de séjour des volailles.

13. Dispositif de séchage pour le séchage de fientes de volailles déposées sur une surface de récupération d'un dispositif de récupération dans un dispositif d'élevage de volailles selon une des revendications précédentes,
- le dispositif de séchage comprenant un élément à compartiments qui s'appuie de manière pivotable autour d'un axe de pivotement qui est orienté suivant un angle de 45 à 90° par rapport à la surface de récupération, le dispositif de séchage présentant un dispositif d'entraînement qui est conçu pour mettre l'élément à compartiments en mouvement rotatif autour de l'axe de pivotement, le mouvement rotatif étant un mouvement pivotant réciproque autour de l'axe de pivotement,
dans lequel, de préférence,
- le dispositif de séchage est conçu pour être disposé entre la zone de séjour et la surface de récupération, et/ou
- l'élément à compartiments comprend un premier élément en forme de plaque qui s'étend dans un premier sens longitudinal radial en partant de l'axe de pivotement, et/ou
- l'élément à compartiments comprend un second élément en forme de plaque qui s'étend dans un second sens longitudinal radial qui s'étend vers le premier sens longitudinal en partant de l'axe de pivotement dans le sens opposé à partir de l'axe de pivotement, et/ou
- le premier et éventuellement le second élément en forme de plaque comprend un matériau élastomère, est en particulier constitué d'un matériau élastomère, et/ou
- le dispositif d'entraînement est conçu pour entraîner le dispositif de séchage dans un mouvement pivotant exécuté en réciprocité et la fréquence du mouvement pivotant se situe dans une plage autour d'une fréquence de résonance du dispositif de séchage, de préférence dans une fréquence de résonance du dispositif de séchage, et/ou
- le dispositif d'entraînement comprend une unité d'entraînement qui est connectée mécaniquement au moyen d'un élément de couplage au dispositif de séchage, l'élément de couplage étant de préférence un dispositif à câble, et/ou
- le dispositif de séchage présente une pluralité d'éléments à compartiments qui s'appuient respectivement de manière pivotable autour d'un axe de pivotement associé à chaque élément à compartiments, les axes de pivotement étant orientés suivant un angle de 45 à 90° par rapport à la surface de récupération et étant espacés les uns des autres dans un sens longitudinal, et étant conçus pour être montés en dessous d'une zone de séjour des animaux qui s'étend en une rangée le long de l'axe longitudinal, et/ou
- la zone de séjour des volailles s'étend dans un sens longitudinal et présente une largeur perpendiculairement au sens longitudinal, le dispositif d'entraînement étant conçu pour entraîner l'élément à compartiments dans un mouvement réciproque sur une plage angulaire de pivotement prédéfinie, la longueur s'étendant radialement par rapport à l'axe de pivotement de l'élément à compartiments est supérieure à la largeur de la zone de séjour des volailles, et la plage angulaire de pivotement prédéfinie étant sélectionnée de manière à ce que l'élément à compartiments ne s'étende, dans aucune section de mouvement du mouvement réciproque, au-delà de la largeur de la zone de séjour des volailles.
